# EUROPEAN PATENT APPLICATION

(11) **EP 4 844 784 A1**
(43) Date of publication of application: **25.11.2026**
(21) Application number: 25923630.5
(22) Date of filing: 04.02.2025
(51) Int. Cl.: G21F 9/28, B23K 26/36, B23K 26/073

(54) **CONTAMINANT REMOVAL DEVICE AND CONTAMINANT REMOVAL METHOD USING SAME**

(71) Applicant: Diatech Inc., Kobe-shi, Hyogo, 650-0015 (JP); Mito Kogyo Co., Ltd., Tokyo 101-0036 (JP)
(72) Inventor: TANIMOTO, Akiyoshi, Kobe-shi, Hyogo 650-0015 (JP); ONUMA, Mitsuo, Tokyo 101-0036 (JP); IIDA, Yoshikazu, Tokyo 101-0036 (JP); HASEGAWA, Satoshi, Tokyo 101-0036 (JP)
(74) Representative: Dehns
(86) International application number: PCT/JP2025/003549
(87) International publication number: WO 2026/167744

(57) **Abstract**

A contaminant removing apparatus for removing a surface contaminant by irradiating a contaminated surface with a nano-pulse laser beam emitted from a pulse oscillator, the contaminant removing apparatus including a means for converting a nano-pulse laser beam 40 that is a Gaussian shaped beam emitted from the pulse oscillator into a nano-pulse laser beam 44 of a rectangular flat top shape by using a flat beam shaper, and a means for irradiating the contaminated surface with the nano-pulse laser beam 44 of the rectangular flat top shape, wherein the surface contaminant is removed as a solid not smaller than 0.15 µm. Thus, the present invention provides a contaminant removing apparatus that removes a contaminant without damaging a base material and without volatilizing the contaminant, and a contaminant removing method using the contaminant removing apparatus.

## Description

### Technical field

The present invention relates to a contaminant removing apparatus and a contaminant removing method using the contaminant removing apparatus.

### Background Art

Radioactive contaminants, such as cesium oxide and strontium oxide, or chemical contaminants, such as polychlorinated biphenyl (PCB) and dioxin, are generally harmful to the human body and the earth's life and need to be removed.

Patent Document 1 proposes removing a radioactive contaminant present on the surface of a metal base material by irradiating the radioactive contaminant with a laser beam to evaporate or volatilize the radioactive contaminant together with a surface layer of the metal base material. Patent Document 2 proposes irradiating a substance with a laser beam at a scanning speed sufficiently faster than a scanning speed at which heat or the like is generated by energy transfer of a pulse-shaped laser to evaporate or remove the substance from the irradiated region.

### Prior Art Documents

### Patent Documents

[Patent Document 1] JP 2020-016530A
[Patent Document 2] JP 2007-315995A

### Disclosure of Invention

### Problem to be Solved by the Invention

However, in the above-described conventional techniques, since the radioactive contaminant is evaporated or volatilized at an extremely high temperature by the laser beam, the radioactive contaminant cannot be collected even with a high performance filter such as a HEPA or ULPA filter currently available. There is a problem that the contaminant diffuses into the air and is not essentially removed, and a problem that the base material is damaged. That is, an air filter has a collection limit of 0.15 pm, and it is not possible to collect contaminants with an air filter by a method that uses a CW laser or ultrashort pulse (picosecond or femtosecond pulse) laser and in which the contaminants are formed into microparticles including a large amount of microparticles not larger than 0.15 pm. For example, a ULPA filter has a collection limit of 0.15 µm, and the collection rate of the ULPA filter significantly decreases for contaminants with a size of 0.1 µm.

In order to solve the above-mentioned conventional problems, the present invention provides a contaminant removing apparatus that removes a contaminant without damaging a base material and without volatilizing the contaminant, and a contaminant removing method using the contaminant removing apparatus.

### Means for Solving Problem

An embodiment of the present invention relates to a contaminant removing apparatus for removing a surface contaminant by irradiating a contaminated surface with a nano-pulse laser beam emitted from a pulse oscillator, the apparatus including: a means for converting a nano-pulse laser beam that is a Gaussian shaped beam emitted from the pulse oscillator into a nano-pulse laser beam of a rectangular flat top shape using a flat beam shaper; and a means for irradiating the contaminated surface with the nano-pulse laser beam of the rectangular flat top shape, wherein the surface contaminant is removed as a solid not smaller than 0.15 pm.

Another embodiment of the present invention relates to a contaminant removing method using the contaminant removing apparatus, the method including: a means for converting a nano-pulse laser beam that is a Gaussian shaped beam emitted from a pulse oscillator into a nano-pulse laser beam of a rectangular flat top shape using a flat beam shaper; and a means for irradiating a contaminated surface with the nano-pulse laser beam of the flat top shape, wherein the surface contaminant is removed as a solid not smaller than 0.15 pm without damaging a base material and without volatilizing the contaminant.

### Effects of the Invention

The present invention includes a means for converting a nano-pulse laser beam that is a Gaussian shaped beam emitted from a pulse oscillator into a nano-pulse laser beam of a rectangular flat top shape by using a flat beam shaper and a means for irradiating a contaminated surface with the nano-pulse laser beam of the rectangular flat top shape, whereby an ablation effect of the nano-pulse beam is maximized and a thermal influence is minimized. Therefore, the surface contaminant can be efficiently removed as a solid not smaller than 0.15 µm without damaging a base material and without volatilizing the contaminant. If the contaminant is in the state of a solid not smaller than 0.15 pm, the contaminant can be collected with a ULPA filter.

### Brief Description of Drawings

[FIG. 1] FIG. 1 is a schematic illustrative diagram of a nano-pulse laser oscillator according to an embodiment of the present invention.
[FIG. 2] FIG. 2 is a schematic illustrative diagram of a nano-pulse laser irradiation apparatus according to an embodiment of the present invention.
[FIG. 3] FIG. 3 shows a schematic waveform diagram (left side) of a nano-pulse laser beam that is a conventional Gaussian shaped beam, and a schematic waveform diagram (right side) of a nano-pulse laser beam that is a rectangular flat top shaped beam according to an embodiment of the present invention.
[FIG. 4] FIG. 4A is a schematic top view of an irradiation state using the rectangular flat top beam shape according to an embodiment of the present invention, and FIG. 4B is a schematic cross-sectional side view of the same.
[FIG. 5] FIG. 5A is a schematic top view of an irradiation state using a conventional Gaussian beam shape, and FIG. 5B is a schematic cross-sectional side view of the same.
[FIG. 6] FIG. 6A is a schematic energy distribution diagram of the laser beam having the flat top beam shape, and FIG. 6B is a schematic energy distribution diagram of the laser beam having the Gaussian beam shape.
[FIG. 7] FIG. 7 shows a contamination state of primary systems of BWR and PWR nuclear reactors reported by the IAEA.
[FIG. 8] FIG. 8 is a cross-sectional view showing an example of a contamination state of a radioactively contaminated metal structure at the Fukushima Daiichi Nuclear Power Plant.
[FIG. 9] FIG. 9 is a cross-sectional view showing an example of a contamination state of a radioactively contaminated metal structure at the Fukushima Daiichi Nuclear Power Plant.
[FIG. 10] FIG. 10 is a cross-sectional view showing an example of a contamination state of a radioactively contaminated metal structure at the Fukushima Daiichi Nuclear Power Plant.
[FIG. 11] FIG. 11 is a cross-sectional view showing an example of a contamination state of a radioactively contaminated metal structure at the Fukushima Daiichi Nuclear Power Plant.
[FIG. 12] FIG. 12 is a photograph showing a cross section before etching before and after laser cleaning according to an embodiment of the present invention.
[FIG. 13] FIG. 13 is a photograph showing a cross section after etching before and after laser cleaning according to Embodiment 1 of the present invention.
[FIG. 14] FIG. 14 is a schematic cross-sectional illustrative diagram showing a state in which coating is performed by adding sodium hydrogen carbonate to an aqueous solution of polyvinyl alcohol resin according to an embodiment of the present invention.
[FIG. 15] FIG. 15 is a schematic cross-sectional illustrative diagram after a resin coating film has been dried.
[FIG. 16] FIG. 16 is a schematic perspective view at the time of nano-pulse laser beam irradiation according to an embodiment of the present invention.
[FIG. 17] FIG. 17 is a schematic perspective view showing a state in which a resin coating film is peeled off according to an embodiment of the present invention.
[FIG. 18] FIG. 18 is a schematic illustrative diagram of an ultrasonic cleaning apparatus according to an embodiment of the present invention.
[FIG. 19] FIG. 19 is a schematic side view of a contaminated object before and after cleaning in Embodiment 3 of the present invention.
[FIG. 20] FIG. 20 is a schematic side view of a contaminated object before and after cleaning in Embodiment 4 of the present invention.

### Description of the Invention

The present invention relates to a contaminant removing apparatus for removing a surface contaminant by irradiating a contaminated surface with a nano-pulse laser beam emitted from a pulse oscillator. The contaminated surface is constituted by, for example, a radioactive contaminant and/or a chemical contaminant containing a chlorine component, a metal and/or an inorganic substance, etc.

The surface contaminant removing apparatus of the present invention includes a means for converting a nano-pulse laser beam that is a Gaussian shaped beam emitted from the pulse oscillator into a nano-pulse laser beam of a rectangular flat top shape using a flat beam shaper, and a means for irradiating the contaminated surface with the nano-pulse laser beam of the rectangular flat top shape, and removes the surface contaminant as a solid not smaller than 0.15 µm. If the contaminant is in the state of a solid not smaller than 0.15 pm, the contaminant can be collected with a HEPA (Hight Efficiency Particulate Aire Filter) or ULPA filter, which is an air filter made of nonwoven fabric or the like. More preferably, the surface contaminant is removed as a solid not smaller than 1 µm. If the contaminant is in the state of a solid not smaller than 1 µm, a large amount of the contaminant can be collected with a recycled air filter, reducing the load on the HEPA or ULPA filter. More preferably, the surface contaminant is removed as a solid not smaller than 10 pm. If the contaminant is in the state of a solid not smaller than 10 pm, the contaminant can be collected easily with the recycled air filter at a higher collection rate. That is to say, a ULPA filter can collect at least 99.9995% of particles with a size of 0.15 µm, and a HEPA filter can collect at least 99.97% of particles with a size of 0.3 pm.

If the surface contaminant is in the state of a solid smaller than 0.1 pm or in an atomized state, it becomes difficult to collect the contaminant with an air filter, and the contaminant is volatilized and diffused into the atmosphere and causes damage on the surroundings, which poses a serious problem.

The nano-pulse laser beam of the rectangular flat top shape emitted toward the contaminated surface preferably has an energy density per unit area of 1 J/cm² or more, more preferably 1 to 10 J/cm², even more preferably 5 to 10 J/cm², and still more preferably 7 to 10 J/cm². By emitting a nano-pulse laser beam with an energy density that is greater than a Van der Waals force or hydrogen bond energy that is adhesion energy at an interface between the contaminant and the surface of a steel material to which the contaminant is adhering, but is not greater than the energy of metal bonds or covalent bonds of the base material, it is possible to efficiently remove the contaminant using an ablation effect of the pulsed laser beam without volatilizing the contaminant and damaging the base material. In order to obtain the energy density, it is preferable to adjust an average output, a pulse width, a repetition frequency, a laser beam scanning speed, and a focal point diameter of the rectangular flat top shape in combination.

The focal point diameter of the nano-pulse laser beam of the rectangular flat top shape emitted toward the contaminated surface is preferably adjustable between 1 mm and 1.8 mm. In this case, not only the focal point diameter of the laser beam can be reduced to increase the energy density, but also a focal point depth can be adjusted by combining the rectangular flat top shape and the focal point diameter of the laser beam, and it is possible to reduce the influence of variations in the energy density of the laser beam caused by unevenness of the base material.

The contaminant removing apparatus preferably includes a pulse oscillator of an Nd:YAG laser that emits beams having a single wavelength controlled to be 1064 nm or more and 1070 nm or less. In a nano-pulse laser having a pulse width of nanosecond order, the occurrence of light dispersion hinders uniform energy application to the irradiated surface, so it is preferable to use a MOPA type pulse oscillator of an Nd:YAG laser that emits beams having a single wavelength controlled to be within the range between 1064 nm and 1070 nm with extremely high precision.

The pulse width of the pulse oscillator is preferably 10 ns or more and 500 ns or less. When the light conversion shape of the pulsed beam is the flat top shape, this makes it possible to increase the energy density (J/cm²) at a light converging surface and adjust the range of energy density per pulse by increasing or reducing the pulse width.

The frequency of the pulse oscillator is preferably 10 kHz or more and 50 kHz or less. This makes it possible to adjust the magnitude of the energy density at the irradiated surface by combining the scanning speed (m/s) of the laser beam and the oscillation frequency (kHz) of the pulsed beam having the flat top shape.

The nano-pulse laser beam emitted from the pulse oscillator preferably has a minimum average output of 500 w or more and a maximum output of 2.5 Mw or more. When the light conversion shape of the pulsed beam is the flat top shape, this makes it possible to increase the energy density (J/cm²) and an output density (W/cm²) at the top surface of the laser beam with an oscillation frequency of 20 kHz or more, and increase the ablation effect of the nano-pulse laser beam.

It is preferable to include a means for transmitting the nano-pulse laser beam emitted from the pulse oscillator to an irradiation apparatus via a fiber cable having a length not shorter than 10 m and not longer than 150 m. This makes it possible to place the oscillator at a safe place in a wide area of a large structure or the like, and to mount only the irradiation apparatus on a remote control robot or the like so as to be movable.

A contaminant removing method of the present invention includes the following steps.

### (1) Conversion step for obtaining nano-pulse laser beam of flat top shape

A Gaussian shaped nano-pulse laser beam emitted from a pulse oscillator is converted into a nano-pulse laser beam of a flat top shape using a flat beam shaper.

### (2) Irradiation step for irradiating contaminated surface with nano-pulse laser beam

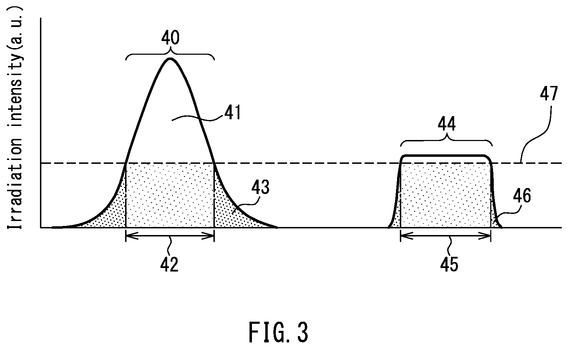

A contaminated surface is irradiated with the nano-pulse laser beam of the flat top shape. The nano-pulse laser beam of the flat top shape makes it possible to prevent damage to the surface of a base material by setting a threshold value for the maximum output intensity (W) of the pulsed beam and to concentrate the energy density (J/cm²) of the pulsed beam (see FIG. 3 showing the shape of the pulsed beam). As a result, the base material can be prevented from being damaged and the contaminant can be removed without volatilizing.

The contaminant removing method of the present invention is suitable for the removal of radioactive contaminants and/or chemical contaminants containing a chlorine component. Also, the contaminants may contain metals and/or inorganic substances.

The contaminant removing method according to an embodiment of the present invention includes the following steps.

### (1) Water-soluble resin solution coating step

In this step, the surface of a base material to which a contaminant is adhering is coated with a water-soluble resin solution that has been adjusted in advance according to the chemical properties of the contaminant using an airless spray, a brush, a roll coater, or the like. For example, if the adhering substance is a radioactive Cs chloride, a radioactive Sr chloride, or oil, an alkaline water-soluble resin coating material is used, and the contaminant is rapidly ionized in water by OH groups in the water and dispersed between polymer microparticles of the water-soluble resin. As for a metal oxide or the like, metal molecules are ionized using a water-soluble resin coating material containing an organic acid, an inorganic acid, or the like, and dispersed as solid microparticles of an oxide or chloride between polymer microparticles when the water-soluble resin is dried.

It is preferable to add an alkaline substance such as sodium hydrogen carbonate or an acidic substance such as ascorbic acid to the water-soluble resin solution. The addition amount is preferably 1 to 20 parts by mass with respect to 100 parts by mass of the water-soluble resin solution. This makes it possible to dissolve the contaminant in water, and disperse the contaminant as microparticles in the water-soluble resin when the water is evaporated.

The coating amount is such that, after the coating film is dried by evaporating water, the dried coating film has a thickness of preferably 0.1 mm to 2 mm, more preferably 0.1 to 1.5 mm, and still more preferably 0.1 to 1 mm.

### (2) Drying step

Drying is preferably performed by natural drying or low-temperature air dehumidifying drying at a temperature of about 20°C to 40°C. As a result of the coating film being dried at a low temperature by gradually evaporating moisture in the coating film in the direction from the surface of a lower layer toward an upper layer due to the effect of low-temperature air dehumidifying, the moisture present between resin polymer particles can be sufficiently evaporated and removed, and the film can be formed without volatilizing a contaminant having a low evaporation temperature. High-temperature air drying is not preferable because a dried film is rapidly formed at the surface of the coating film and moisture remains in the coating film. In this manner, a dried film of the water-soluble resin coating containing the contaminant adhering to the surface of the base material is formed.

### (3) Nano-pulse laser beam irradiation step

This step will be described in detail later. What is important is, by irradiating the dried coating film with the laser beam having the rectangular flat top shape and a nano-pulse width of 20 nm to 100 nm according to the present invention at an appropriate repetition frequency (kHz) and scanning speed, the dried coating film is peeled off from the surface of the base material by the ablation effect of the nano-pulse laser without being damaged by heat. Therefore, the dried coating film can be easily peeled off from the surface of the metal base material later.

### (4) Coating film peeling step

As a result of the nano-pulse laser beam being emitted under the above conditions, a very high vibration phenomenon occurs in the coating film and the surface of the metal base material due to the ablation effect, and a minute separation space is formed at the interface between the coating film and the metal base material, so that the coating film can be more easily peeled off by blowing air in some cases. At this time, the dried coating film is not broken by the air pressure of the air, and therefore, the contaminant is kept from diffusing, and the coating film can be peeled off in the form of a film, so that the contaminant can be safely disposed of.

The water-soluble resin may be any water-soluble resin as long as the resin can dissolve in water, and examples thereof include polyvinyl alcohol, polyvinyl acetal, polyvinyl acetate, polyvinyl pyrrolidone, polyethylene oxide, a phenolic hydroxyl group-containing resin, and a carboxyl group-containing resin. Among these, polyvinyl alcohol is preferable from the standpoint of ease of handling, safety, and cost, for example.

It is preferable that the water-soluble resin solution of polyvinyl alcohol is obtained by adding 1000 to 10000 parts by mass of water to 100 parts by mass of the polyvinyl alcohol resin and dissolving the resin. Water is a solvent that is safe and easy to handle. Also, a dried coating film formed using the polyvinyl alcohol resin has very low adhesion energy of a Van der Waals force with respect to the surface of the metal base material, and the magnitude of the Van der Waals force is usually about 2 to 4 kJ/mol.

The contaminant removing method according to an embodiment of the present invention includes the following steps.

### (1) Ultrasonic cleaning step in organic acid cleaning solution

In this step, a thick-film contaminated object to which a contaminant is adhering is subjected to ultrasonic cleaning in a slightly acidic organic acid cleaning solution. The slightly acidic organic acid cleaning solution is preferably an aqueous solution of citric acid, ascorbic acid, glycolic acid, malonic acid, acetic acid, oxalic acid, or the like. The organic acid is slightly acidic and does not corrode the metal base material. Further, the organic acid has a chelate effect and a high metal ion trapping effect. The treatment temperature may be between 30°C and 60°C. Deposits to be removed by the slightly acidic organic acid cleaning solution easily absorb water. By utilizing this water absorption property, a metal article to be cleaned is immersed in the acidic cleaning solution, and ultrasonic energy is utilized for promoting water absorption into gaps between deposited particles and removal of the deposits. When this method is used, the slightly acidic organic acid intruding into the gaps between the thick-film deposits is vibrated in the gaps between the thick-film deposits due to the propagation of ultrasonic vibrations, thus the thick-film deposits adhering to each other can be separated from each other, and accordingly, it is possible to peel and remove thick-film deposits adhering to metal articles in nuclear facilities in a much shorter time when compared with prior art in which thick-film deposits are sequentially removed only from the surface by using a nano-pulse laser. Moreover, a flow of the cleaning solution is generated on the contaminated metal surface by ultrasonic vibrations of the cleaning solution, and therefore, the contaminant precipitated in the cleaning solution can be immediately removed from the metal surface. It is possible to remove rust from the surface of a metal structure by using the slightly acidic organic acid cleaning solution as described above.

### (2) Ultrasonic cleaning step in alkaline neutralizing solution

In this step, neutralization treatment is carried out by performing ultrasonic cleaning with an alkaline neutralizing solution such as an aqueous solution of sodium metasilicate or sodium hydrogen carbonate. The treatment temperature may be between 5°C and 35°C. It is preferable to mix and neutralize effluent after the organic acid cleaning treatment and effluent after the alkaline neutralization treatment, heat and distill the neutralized treatment liquid, concentrate the contaminant, and dispose of the contaminant by landfill. Among organic acids preferably used in the present invention, citric acid has a boiling point of 175°C, ascorbic acid has a boiling point of 190°C, glycolic acid has a boiling point of 112°C, malonic acid has a boiling point of 140°C, acetic acid has a boiling point of 118°C, and oxalic acid has a boiling point of 365°C, all of which are higher than the boiling point of water, i.e., 100°C, and the evaporation can be easily performed by using an organic acid having a high boiling point.

### (3) Drying step

Drying may be performed by air-drying or dewatering using air, and hot air may be used in cold weather.

### (4) Nano-pulse laser beam irradiation step

The contaminated surface is irradiated with the nano-pulse laser beam having the rectangular flat top shape to remove the contaminant from the contaminated surface. This step will be described in detail later. What is important is, if there are many contaminated metal structures and the area of contaminated surfaces is large, the efficiency of decontamination can be further increased by adding the acidic ultrasonic cleaning as a pretreatment before decontamination using the nano-pulse laser in view of the efficiency of rust removal.

The frequency of ultrasonic waves used in the ultrasonic cleaning in the organic acid cleaning solution and the neutralizing solution is preferably 15 to 40 kHz, and more preferably 26 to 38 kHz. Further, it is preferable to attach a cleaning solution stirring/circulating pump to make cleaning conditions in a cleaning tank uniform. Further, it is preferable to attach a cyclone type microparticle removing apparatus for purifying the cleaning solution in the cleaning tank to remove coarse particles having a particle size of 10 pm or more that have been removed from the metal surface through the ultrasonic cleaning, and prevent damage to the cleaning tank due to contact resonance with an oscillating plate or the like vibrated by ultrasonic waves. After the contaminant is removed by the ultrasonic cleaning in the organic acid cleaning solution such that the contaminant becomes thin (about 20 µm or less), the residual contaminant on the surface of the metal base material is removed through irradiation with the nano-pulse laser beam.

In the present invention, it is also possible to add a step of forming a coating film on the contaminated surface using a water-soluble resin solution of polyvinyl alcohol or the like between the ultrasonic cleaning step (2) in the alkaline neutralizing solution and the drying step (3). In this case, the contaminant can be peeled off from the contaminated surface together with the coating film of the water-soluble resin, and can be efficiently removed without being volatilized and causing damage to the base material.

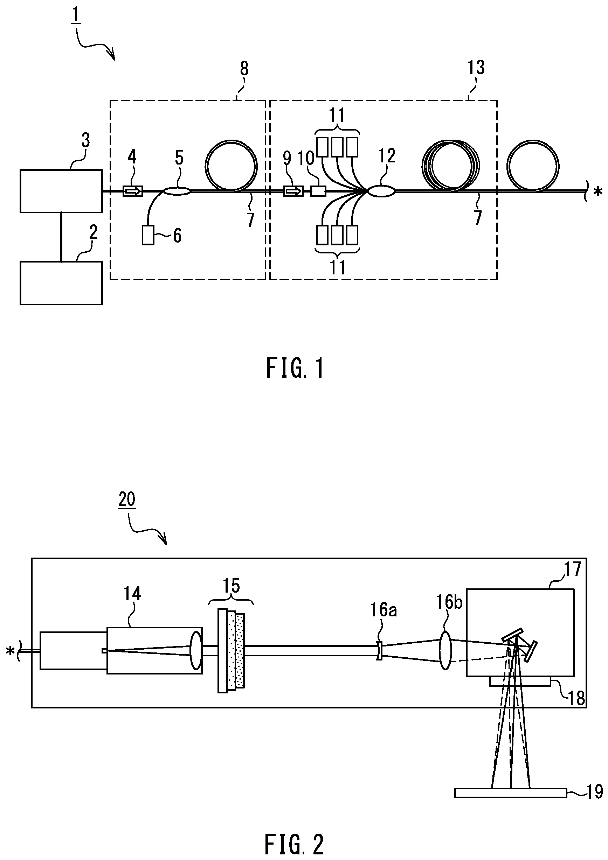

Next, the present invention will be described with reference to the drawings. In the following description, the same reference numerals denote the same parts. FIG. 1 is a schematic illustrative diagram of a nano-pulse laser oscillator 1 according to an embodiment of the present invention. The nano-pulse laser oscillator 1 generates pulses using a pulse generator 2. The pulse generator preferably uses an Nd:YAG fiber laser. This is an infrared laser with a single wavelength of 1064 nm, and if an average output is set to 500 w or more, a fiber cable can be extended up to 150 m when the output is 2 kw. Accordingly, it is possible to place the oscillator at a safe place in a wide area of a large structure or the like, and to mount only an irradiation apparatus on a remote control robot or the like so as to be movable. It is preferable to use, as the pulse oscillator 1, a MOPA type pulse oscillator capable of emitting a pulsed beam having a pulse width of nanosecond order with a stable maximum output and a stable frequency. It is necessary to irradiate an interface between a metal surface and a surface contaminant adhering thereto with light having a single wavelength with high precision and little light dispersion. Conventionally, CW lasers having a large wavelength tolerance of 1070±50 nm have been used, but in the case of a nano-pulse laser having a pulse width of nanosecond order, the occurrence of light dispersion hinders uniform energy application to the irradiated surface, so it is preferable to use a MOPA type pulse oscillator of an Nd:YAG laser that emits beams having a single wavelength controlled to be within the range between 1064 nm and 1070 nm with extremely high precision.

The pulses generated by the pulse generator 2 are converted into a picosecond or subnanosecond pulse laser beam by a seed LD 3.

Next, an isolator 4 in a preamplifier 8 prevents the signal from going around, protects the equipment, and reduces the influence of noise, and semiconductor laser excitation light is input from an excitation LD 6 to a rare earth-doped fiber cable 7 via a coupler 5.

Next, an isolator 9 in a main amplifier 13 prevents the signal from going around, protects the equipment, and reduces the influence of noise, a physical phenomenon in a specific frequency band is extracted by a band-pass filter 10, and semiconductor laser excitation light is input from excitation LDs 11 to the rare earth-doped fiber cable 7 via a coupler 12. The fiber cable 7 is connected to a nano-pulse laser irradiation apparatus 20.

FIG. 2 is a schematic illustrative diagram of the nano-pulse laser irradiation apparatus 20 according to an embodiment of the present invention. First, the laser beam is collimated by a collimator 14. Then, the beam having a Gaussian shape, which is the beam shape of common pulse lasers, is converted by a flat beam shaper 15 such that the beam has a flat top beam shape when it reaches an irradiated surface. Then, the nano-pulse laser beam having the flat top shape is passed through optical system focus adjusters 16a and 16b, a scan head 17, and a laser profiler 18 to irradiate an irradiation target object (contaminated surface) 19 with the nano-pulse laser beam having the flat top shape.

FIG. 3 shows a schematic waveform diagram (left side) of a nano-pulse laser beam that is a Gaussian shaped beam 40 and a schematic waveform diagram (right side) of a nano-pulse laser beam that is a rectangular flat top shaped beam 44 according to an embodiment of the present invention. By flattening the shape of a laser beam into a trapezoidal shape like the rectangular flat top shaped beam 44, it is possible to reduce a thermal influence on the irradiated surface, utilize only the ablation effect, which is a vibration attrition effect, and suppress melt oxidation of the base material surface. However, in this case, an excess energy portion of a common pulse laser beam is flattened such that the irradiation intensity reaches a line slightly above an ablation threshold value 47, and accordingly, the area where the irradiation intensity is the ablation threshold value 47 increases. As described above, in order to separate a contaminant adhering to the surface of a metal base material at a separation rate that is satisfactory as a cleaning rate for a metal structure, it is necessary to increase the irradiation intensity up to several joules per 1 cm², which is an irradiation intensity level corresponding to the ablation threshold value at which adhesion due to a Van der Waals force or hydrogen bond energy, which is the adhesion energy of the contaminant, can be broken at an appropriate rate in an appropriate range. For this reason, it is preferable to use an irradiation apparatus that stably outputs a pulsed beam of an Nd:YAG fiber laser (wavelength 1064 nm) with an average output of 500 w or more, the maximum output of 1.25 Mw or more, a pulse width of 10 ns to 500 ns, an oscillation frequency of 10 to 50 kHz, and a laser beam scanning speed of 1 to 10 m/s, and includes an optical system that makes the pulsed beam have the rectangular flat top shape. In FIG. 3, reference numeral 41 denotes the excess energy of the Gaussian shaped beam 40, reference numeral 42 denotes an irradiation diameter, and reference numeral 43 denotes thermal energy. Reference numeral 45 denotes an irradiation diameter of the rectangular flat top shaped beam 44, and reference numeral 45 denotes thermal energy at the skirts. The width of the thermal energy is very narrow compared with the width of the thermal energy 43 of the Gaussian shaped beam 40.

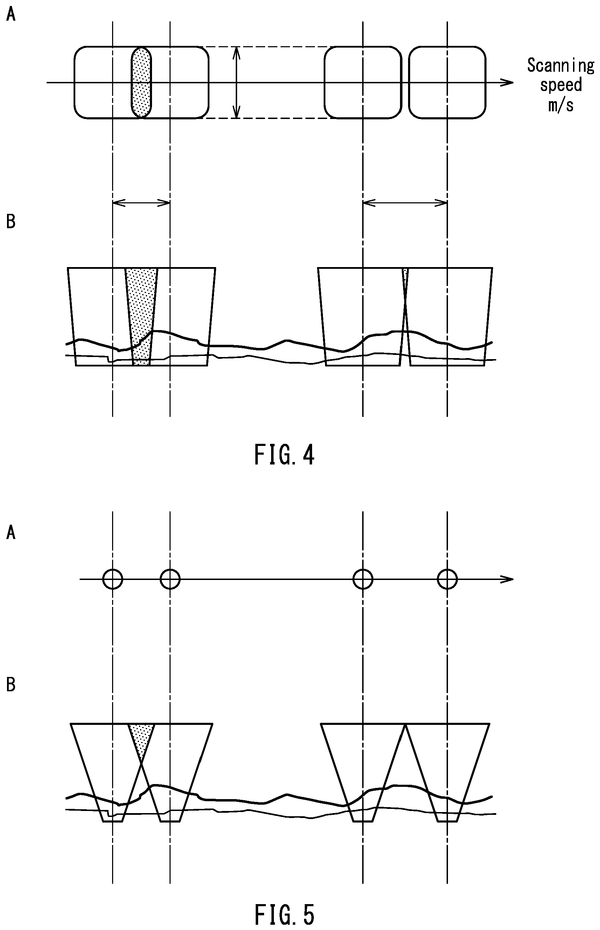

FIG. 4A is a schematic top view of an irradiation state using the rectangular flat top beam shape according to an embodiment of the present invention, and FIG. 4B is a schematic cross-sectional side view of the same. FIG. 5A is a schematic top view of an irradiation state using a conventional Gaussian beam shape, and FIG. 5B is a schematic cross-sectional side view of the same. In FIGS. 4A and 4B and FIGS. 5A and 5B, it is assumed that red rust (Fe₂O₃) generated on the surface of a steel material is a contaminant, and the red rust layer has a thickness of about 500 µm. The adhesion energy at the interface between the contaminant and the surface of the steel material to which the contaminant is adhering is a Van der Waals force, and the magnitude of the Van der Waals force is 2 to 4 kj/mol per 1 cm², and accordingly, in order to remove the red rust, it is estimated that the red rust is adhering with an energy density shown below.

### Example of the calculation of adhesion energy (J/cm²) of red rust (Fe₂O₃)

(1) Determine the molecular weight per mole of the adhering red rust: 160 g/mol
(2) The thickness of the adhering red rust: 500 pm
(3) The weight of the red rust per 1 cm² of the adhering surface: 5.24 g/cm² (density of (Fe₂O₃) × 1/20 = 0.262 g
(4) The number of moles of the red rust adhering per 1 cm²: 0.262 g = 160 g/mol = 0.0016375 mol
(5) Van der Waals binding force of 0.0016375 mol of the red rust : 3.275 J/cm² to 6.55 J/cm²

In view of the above, it is theoretically understood that, when removing the red rust with a thickness of 500 pm, it is possible to separate the contaminant by irradiating the contaminant with a pulsed laser beam having an energy density of 7 J/cm². However, the density of energy converted to the ablation effect is a certain proportion of the energy density of the nano-pulse laser, which is 7 J/cm², and the ablation effect is reduced due to a certain amount of energy being absorbed by free electrons of the metal base material. Moreover, an actual interface between a surface of the generated red rust and the steel material to which the red rust is adhering is not flat but is uneven due to corrosion, and this increases the area of the interface. Further, the distance from a laser beam emitting lens to the interface slightly changes due to the unevenness of the interface. In addition, an actual red rust layer does not have a constant thickness. Therefore, attention needs to be paid to the following when removing red rust from a steel material through pulsed laser beam irradiation. (1) It is preferable to perform irradiation with a pulsed beam having an energy density equivalent to 7 J/cm². With this energy density, it is not possible to remove red rust with the theoretical thickness of 500 µm by performing irradiation once, but if reciprocating irradiation is performed several times, it is possible to separate only the contaminant by using only the ablation effect of the nano-pulse laser without evaporating or volatilizing the contaminant and without damaging the base material. In the reciprocating irradiation, it is necessary to pay attention to overheating of the contaminant and the metal base material, which may occur due to the ablation effect.

If the amount of the adhering contaminant is sufficiently small, it is possible to separate the contaminant by performing irradiation once with an energy density close to the theoretical value.

That is to say, the ablation effect of the nano-pulse laser utilizes the repetition of generation and extinction of plasma generated by pulse oscillation of the nano-pulse laser beam at an interval of microseconds. The number of times of repetition can be controlled by controlling the repetition frequency of the pulsed beam. By using the ablation effect generated as described above, it is possible to break adhesion due to the Van der Waals force or hydrogen bond energy, which is the adhesion force of the contaminant.

However, if a thick layer of the contaminant is adhering, even if pulse energy with an energy density of 7 J/cm² is applied, not all the energy is converted into mechanical energy, i.e., the ablation effect, as described above, and some proportion of the energy is consumed as thermal energy. The proportion cannot be specified because it changes depending on the characteristics of the contaminant, i.e., whether the contaminant is a metal oxide or an organic substance, and the electric resistance of the metal base material, for example. Therefore, in many cases, it is difficult to completely remove the contaminant through nano-pulse laser irradiation with an energy density calculated by a theoretical calculation.

Therefore, the contaminant is gradually separated and removed from the surface layer of the contaminant with the nano-pulse laser having an energy density of 7 J/cm², which does not damage the surface of the base material, whereby the contaminant can be separated while preventing evaporation and volatilization of the contaminant and damage to the base material.
(2) In order to satisfy the above requirement, it is advantageous to perform irradiation with a flat top shaped beam having a threshold value of 7 J/cm² for the irradiation intensity of the pulsed beam. With the flat top beam shown in FIG. 4A, it is possible to perform irradiation without forming any gap, when compared with the Gaussian beam shown in FIG. 5, provided that the pulsed beams have the same oscillation frequency and the same scanning speed.
(3) It is preferable to adopt an appropriate irradiation pitch under the above condition (1). The appropriate irradiation pitch is determined based on a combination of the scanning speed and the repetition frequency of the laser beam.

When irradiation conditions are set as shown by the upper left diagram in FIG. 4, the scanning speed and the repetition frequency are set in a harmonized manner, and accordingly, there is no gap on the irradiated surface and the contaminant can be removed reliably, but if the scanning speed is too high relative to the condition of the repetition frequency as shown by the upper right diagram in FIG. 4, there is a gap on the irradiated surface and the contaminant in the gap is left without being removed. If the number of moles of the adhering contaminant per unit area (cm²) is not constant but varies, it is possible to remove the contaminant without leaving any residue by changing the irradiation pitch by changing the combination of the scanning speed and the repetition frequency of the laser beam to change an irradiation overlapping rate of the pulsed beam.

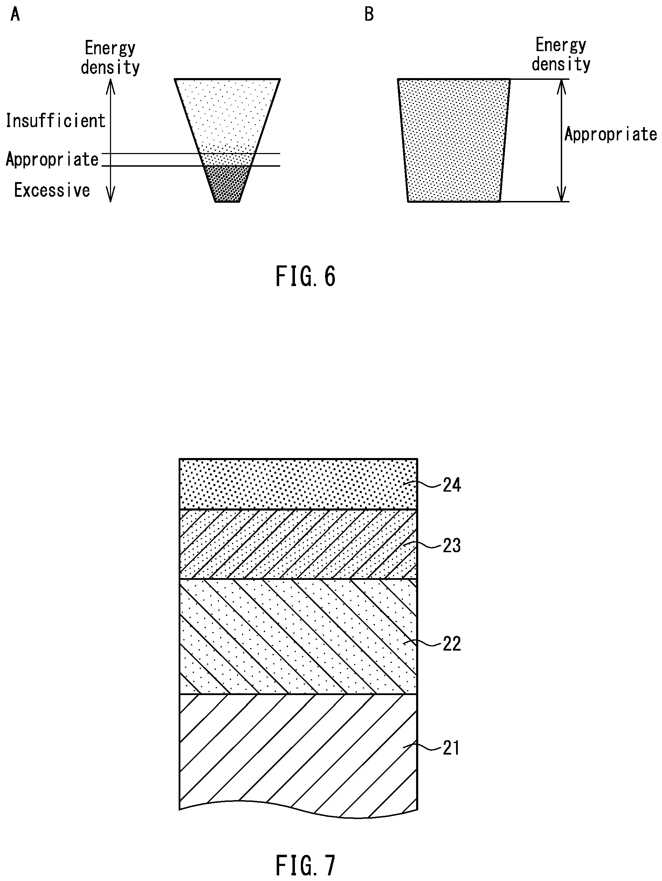

FIG. 6A is a schematic energy distribution diagram of the laser beam having the flat top beam shape, and FIG. 6B is a schematic energy distribution diagram of the laser beam having the Gaussian beam shape. It can be found that, as for the flat top beam shown in FIG. 6B, an appropriate energy density zone can be set wide in both the focal distance direction and the focal point diameter direction, when compared with the Gaussian beam shown in FIG. 6A. Within this appropriate zone, it is possible to appropriately apply energy necessary for the separation. Further, within the appropriate zone, the applied energy is higher than or equal to energy that can break adhesion due to the Van der Waals force or hydrogen bond energy that is the adhesion force of the contaminant, but energy that breaks metal bonds of the metal base material is not applied, and therefore, the steel portion is not damaged.

As described above, it is possible to reliably remove a contaminant such as a radioactive contaminant from the surface of a metal structure or the like without damaging the base material by applying the nano-pulse laser beam of the flat top beam shape to the interface between the contaminant and the base material with an appropriate repetition frequency, an appropriate scanning speed, and an appropriate focal point diameter to provide energy with an energy density sufficient to counteract the Van der Waals force or hydrogen bonding.

FIG. 7 shows a contamination state of primary systems of a boiling water reactor (BWR) and a pressurized water reactor (PWR) previously reported by the International Atomic Energy Agency (IAEA). A lower layer 22 made of a base alloy of Fe, Cr, Ni, etc., an intermediate layer 23 formed by deposition of contaminants, which is a chromium rich layer made of FeCr₂O₄, Cr₂O₃, or the like, and an outer layer 24 formed by deposition of contaminants, which is an ion rich layer made of Fe₂O₃ or the like, are layered on a metal base material 21 such as stainless steel. As can be seen from FIG. 7, the metal base material 21 is stainless steel containing a large amount of Cr, Ni, etc., for the purpose of preventing corrosion, and radioactively contaminated layers on the metal base material are roughly classified into three layers. The outer layer 24 is mainly composed of an Fe oxide, the intermediate layer 23 is formed by deposition of contaminants (a Cs oxide, a Sr oxide, etc.,) mainly composed of a Cr oxide, and the lower layer 22 is a SUS alloy layer of the base metal. The thickness of the contaminated layers excluding the radioactivated portion of the base metal in the lower layer is such that the oxide of the base metal and the oxides of radionuclides, and in some cases, chlorides thereof are deposited with a maximum thickness of 15 pm on the surface of the base metal.

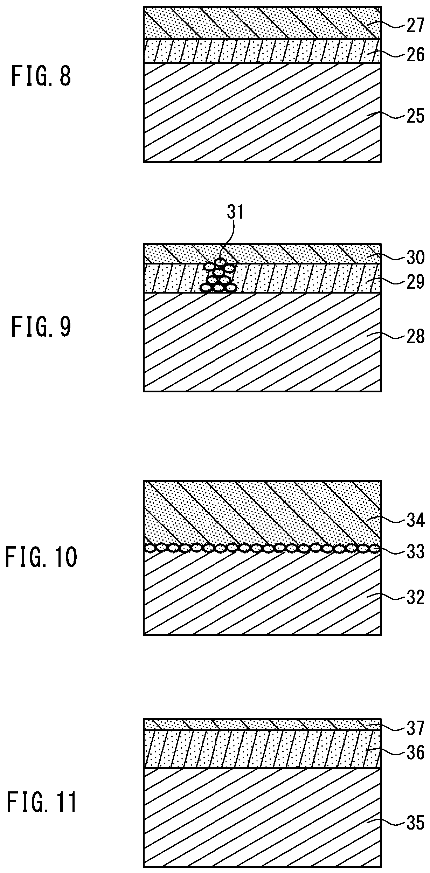

FIGS. 8 to 11 are cross-sectional views showing an example of contamination states of radioactively contaminated metal structures at the Fukushima Daiichi Nuclear Power Plant. In FIG. 8, a metal oxide layer 26 (radioactively contaminated layer) having a thickness of several micrometers and containing Cr or the like and a layer 27 (radioactively contaminated layer) having a thickness of several micrometers and containing an Fe oxide or chloride are deposited on a base metal 25 slightly subjected to radioactive contamination.

In FIG. 9, a protective coating layer 29 made of acrylic resin, urethane resin, or the like with a thickness of several tens of micrometers, a radioactively contaminated film 30 having a thickness of several tens of micrometers and containing degraded coating particles, sludge and the like in a mixed state, and a degraded resin portion 31 present in the direction of the thickness of the protective coating layer 29 are present on a base metal 28 slightly subjected to radioactive contamination. The radioactively contaminated film 30 and the degraded resin portion 31 contain an Fe oxide, an Fe chloride, sea salt, a Ce oxide, a Sr oxide, a Ce chloride, a Sr chloride, or the like.

In FIG. 10, a layer 33 containing a Ce oxide, a Sr oxide, a Ce chloride, a Sr chloride, sludge, etc., in a mixed state and having a thickness of several tens to several hundreds of micrometers is present on a base steel material 32 slightly subjected to radioactive contamination, and a contaminated layer 34 containing an Fe oxide, an Fe chloride, sea salt, etc., is present on the layer 33.

In FIG. 11, an epoxy resin layer 36 having a thickness of several hundreds of micrometers to several millimeters is present on a base steel material 35 slightly subjected to radioactive contamination, and a layer 37 of microparticles of a Ce chloride or a Sr chloride having a thickness of several micrometers is present on the epoxy resin layer 36. The epoxy resin layer 36 contains tritium at its surface, has water absorbing properties, and is radioactively contaminated.

Like the contamination states shown in FIGS. 8 to 11, the contamination state of metal structures at the Fukushima Daiichi Nuclear Power Plant varies due to a difference between base metals, a difference between treatments on the metal surfaces, a difference between the structures before the accident, a difference between the structures after the accident, and so on. In addition to these differences in the contamination state, there are also differences in the shape, size, installation conditions, and storage conditions of the metal structures.

FIG. 8 shows a metal structure that has already been disassembled and removed and stored in a cask, and is separately stored according to the degree of contamination. FIG. 9 shows a metal structure whose degree of radioactive contamination is low but that is a large structure, and is installed or stored outdoors. FIG. 10 shows a separately stored object such as a jig, apparatus, or the like used in disassembly work or the like. FIG. 11 shows a metal structure that is currently installed in a high-dose area without being disassembled or removed.

The contaminant removing method according to the present invention can be applied to any form of contamination.

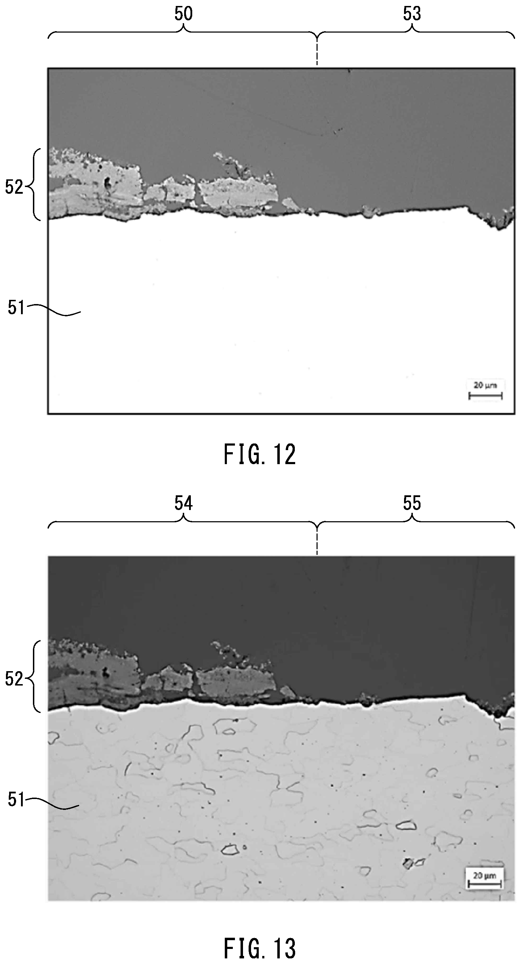

FIG. 12 is a photograph showing a cross section before etching and before and after laser cleaning according to Embodiment 1 of the present invention. Contaminants 52 such as red rust (Fe₂O₃), salt (NaCl), sand, etc., were adhering to the surface of an iron base material portion 51 whose cross section 50 before the laser cleaning is shown on the left in FIG. 12. However, the contaminants were removed well from the surface of the iron base material portion 51 having a cross section 53 after the laser cleaning, and fine irregularities on the surface of the iron base material portion were exposed. This shows that the contaminants were almost completely removed.

FIG. 13 is a photograph showing a cross section after etching and before and after the laser cleaning of Embodiment 1 of the present invention. The contaminants 52 such as red rust (Fe₂O₃), salt (NaCl), sand, etc., were adhering to the surface of the iron base material portion 51 whose cross section 54 before the laser cleaning is shown on the left in FIG. 13. However, the contaminants were removed well from the surface of the iron base material portion 51 having a cross section 55 after the laser cleaning, and fine irregularities on the surface of the iron base material portion were exposed. This shows that it was possible to remove the contaminants almost completely without damaging the iron base material portion.

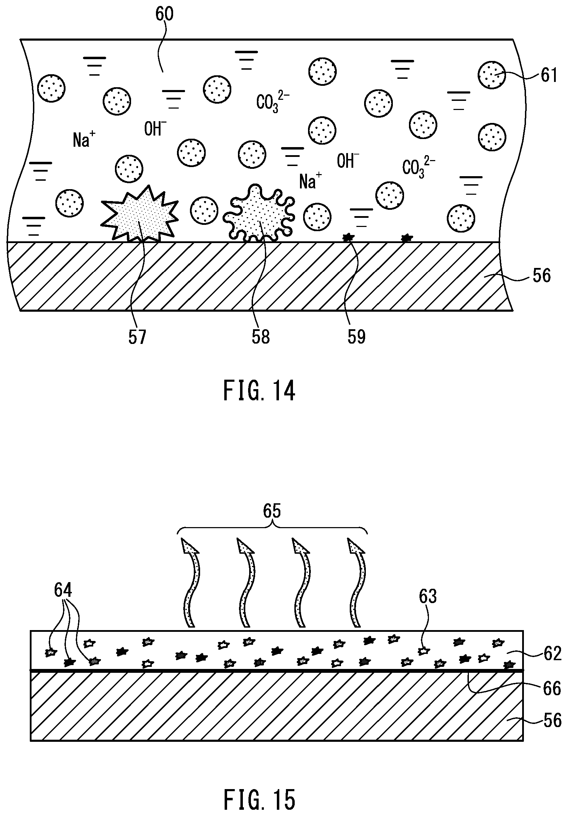

FIG. 14 is a schematic cross-sectional illustrative diagram showing a state in which coating is performed by adding sodium hydrogen carbonate to an aqueous solution of polyvinyl alcohol resin according to an embodiment of the present invention. Particles 57 of chlorides of Cs, Sr, Na, or the like, oil molecules 58 of a PCB contaminant or the like, and microparticles 59 insoluble in water are adhering to the surface of a SUS base material 56. A wet coating film 60 contains dissolved polyvinyl alcohol resin 61, sodium ions (Na⁺), hydroxide ions (OH⁻), carbonate ions (CO₃²⁻), and the like.

FIG. 15 is a schematic cross-sectional illustrative diagram after the resin coating film has been dried. There is a weak adhesion surface 66 where a Van der Waals force acts between the SUS base material 56 and a polyvinyl alcohol resin coating film 62. The polyvinyl alcohol resin coating film 62 contains microparticles 64 that have been micronized and captured in the polyvinyl alcohol resin coating film, microparticles 63 of sodium hydrogen carbonate (NaHCO3), and the like. Arrows 65 show the direction in which moisture evaporates at low temperatures.

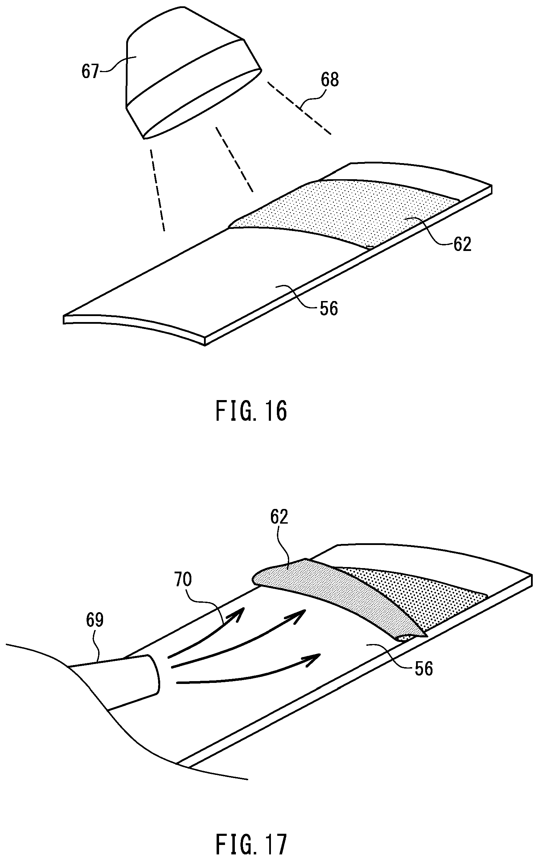

FIG. 16 is a schematic perspective view at the time of nano-pulse laser beam irradiation according to an embodiment of the present invention. The polyvinyl alcohol resin coating film 62 on the surface of the SUS base material 56 is irradiated with a nano-pulse laser beam 68 emitted from a laser irradiating apparatus 67.

FIG. 17 is a schematic perspective view showing a state in which the resin coating film is peeled off according to an embodiment of the present invention. When air 70 is blown from an air duster (air knife) 69 toward the interface between the SUS base material 56 and the polyvinyl alcohol resin coating film 62, the resin coating film 62 separates easily and can be disposed of alone as it is.

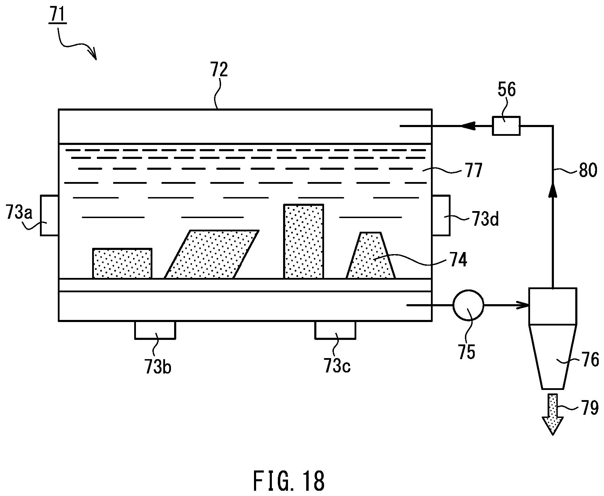

FIG. 18 is a schematic illustrative diagram of an ultrasonic cleaning apparatus 71 according to an embodiment of the present invention. In the ultrasonic cleaning apparatus 71, ultrasonic oscillators 73a to 73d are directly connected to a cleaning tank 72 to generate ultrasonic waves with frequencies of 20 to 40 kHz. Contaminated objects 74 are immersed in the cleaning tank 72. A cleaning solution circulation circuit 80 is provided outside the cleaning tank 72, and a circulation pump 77, a cyclone 7+6, and a fine bubble generator 56 are provided in the circuit 80 to circulate a cleaning solution 57. The cyclone 55 removes particles 79 having an average diameter larger than or equal to 10 µm, for example, and the particles are taken out from a lower portion of the cyclone. The fine bubble generator 77 generates a mixed fluid of water and bubbles containing an organic acid cleaning solution and fine bubbles, and returns the mixed fluid to the cleaning tank 72. The cleaning tank 72 can also be used as an ultrasonic cleaning tank filled with an alkaline neutralizing solution. The cleaning tank 72 may be made of SUS, but is preferably coated with a protective coating material.

### Examples

The following describes the present invention with reference to examples. The present invention is not limited to the examples.

### (Example 1)

### (1) Contaminant removing apparatus

The apparatus shown in FIGS. 1 and 2 was used. "ROD 1000W' (trade name) manufactured by Narran was used as the nano-pulse laser oscillator 1. This product is an Nd:YAG fiber laser with an average output of 1000 W, a light wavelength of 1064 to 1070 nm, a frequency of 10 to 50 kHz, a transmission fiber length of 15 to 100 m, an irradiator weight of 2.5 kg, an ambient temperature of 5°C to 45°C, a weight of 245 kg, and a power consumption of 5 kW.

The flat beam shaper 15 manufactured by Narran was also used.

A nano-pulse laser beam having a rectangular flat top shape and used for irradiation of a contaminated surface had the waveform shown on the right in FIG. 3, an energy density per unit area of 7 J/cm², a focal point diameter of 1 mm, and a pulse width of 40 ns.

### (2) Object to be cleaned

After salt water was sprayed onto a steel plate, red rust (Fe₂O₃) generated by natural exposure was cleaned from the surface of the steel plate by using the contaminant removing apparatus described above. A first reason why the removal of red rust generated by spraying salt water was examined was to solve a question of whether the red rust generated on the steel plate and containing salt water could be removed with the laser. A second reason was to solve a question of whether NaCl (salt), which is an impurity other than red rust, could be removed. Since Na belongs to alkali metals like Cs, which is a radionuclide, if Na can be removed, it is presumed that Cs can be removed as well.

### (3) Result of removal of contaminant

Table 1 below shows results of elemental analysis before and after the laser cleaning, FIG. 12 shows the photograph of a cross section before etching and before and after the laser cleaning, and FIG. 13 shows the photograph of a cross section after etching and before and after the laser cleaning.

**[Table 1]**

| | C | O | Na | Si | Cl | Ca | Fe | Total |
|---|---|---|---|---|---|---|---|---|
| Before cleaning (% by mass) | 2.21 | 37.53 | 2.71 | 0.14 | 0.76 | 0.15 | 56.50 | 100.00 |
| After cleaning (% by mass) | 1.11 | 2.36 | 0.15 | 0 | 0.09 | 0 | 96.29 | 100.00 |

As shown in Table 1, about 94% of Na could be removed and the residual amount was about 1/20. From this experimental fact, it is presumed that Cs belonging to the alkali metals like Na can be removed in the same manner. Further, as shown in FIG. 12, contaminants such as red rust (Fe₂O₃), salt (NaCl), sand, etc., adhering to the upper left of the iron base material portion before the laser cleaning were removed well through the laser cleaning, and fine irregularities on the surface of the iron base material portion were exposed. Also, in the photograph of FIG. 13 showing the cross section after etching, it was found that fine irregularities on the surface of the iron base material portion were exposed. Furthermore, at the energy density of the contaminant removing apparatus of this example, both the adhering contaminants and the surface of the base material were heated at a temperature (5°C to 75°C) that was about +30°C higher than the ambient temperature of 5°C to 45°C, and it was possible to separate the contaminants from the surface of the base material as solid particles mainly composed of particles not smaller than 0.5 µm, and collect the contaminants with an air filter without volatilizing or evaporating the contaminants and damaging the surface of the metal base material. The particles collected on the air filter were observed using a microscope and it was confirmed that the solid particles were not smaller than 0.5 µm.

From the above results, it was confirmed that the contaminant removing apparatus according to this example can remove the contaminants without damaging the base material and without volatilizing the contaminants.

### (Example 2)

### (1) Water-soluble resin

Polyvinyl alcohol was used as a water-soluble resin. Polyvinyl alcohol is soluble in water and has a melting point of 200°C, a density of 1.19 g/cm³, and a boiling point of 340°C. The polyvinyl alcohol (10% by mass), sodium hydrogen carbonate (5% by mass), and 85% by mass of water as the remainder were mixed to obtain a coating solution.

### (2) Coating

A contaminated surface was spray-coated using an airless gun, and allowed to dry naturally at 25°C. The coating amount was adjusted such that a dried coating film had a thickness of 0.2 mm. The contaminated surface was a surface of a SUS base material to which sea salt, trace amounts of other contaminants (including oils and fats, trace amounts of metal oxides), and chlorides of Cs and Sr radionuclides were adhering.

As a result of the aqueous solution being applied, the sea salt and Cs and Sr chlorides dissolved in water in the aqueous polyvinyl alcohol solution, and a trace amount of microparticles that did not dissolve in water were incorporated into the coating film during the formation of the dried coating film to be contained therein.

### (3) Cleaning method

After moisture evaporated from the applied aqueous solution and the coating film was completely formed, the surface of the coating film was irradiated with a nano-pulse laser, and air was blown toward the interface between the coating film and the SUS base material to peel off and remove the coating film.

This cleaning method uses an effect of incorporating contaminants into the coating film during the formation of the coating film through evaporation of moisture from the slightly alkaline polyvinyl alcohol aqueous solution to easily remove the contaminates as the film from the surface of the base material, and also uses the film-forming ability and heat resistance of the formed coating film. Since a Van der Waals force that is an adhesion force of the polyvinyl alcohol coating film with respect to the SUS base material is very small, the processing speed of the nano-pulse laser irradiation was increased, and even in a SUS base material having a curved surface, contaminants present in a deeper portion of the curved surface could be removed as a film, and it was possible to prevent scattering of fine dust of the contaminants into the atmosphere.

### (4) Contaminant removing apparatus

The apparatus shown in FIGS. 1 and 2 was used. "ROD 500W" (trade name) manufactured by Narran was used as the nano-pulse laser oscillator 1. This product is an Nd:YAG fiber laser with an average output of 500 W, a light wavelength of 1064 to 1070 nm, a frequency of 10 to 50 kHz, a transmission fiber length of 15 to 100 m, an irradiator weight of 2.5 kg, an ambient temperature of 5°C to 45°C, a weight of 195 kg, and a power consumption of 3.5 kW.

"ROD500" (trade name) manufactured by Narran was also used as the flat beam shaper 15.

A nano-pulse laser beam having a rectangular flat top shape and used for irradiation of a contaminated surface had the waveform shown on the right in FIG. 3, an energy density per unit area of 1 J/cm², a focal point diameter of 1.8 mm, and a pulse width of 20 ns.

### (5) Coating film peeling step

After irradiation was performed with the nano-pulse laser beam having the rectangular flat top shape, air was blown toward the interface between the base material and the polyvinyl alcohol resin coating film from an air duster (air knife) as shown in FIG. 17 to peel off the resin coating film. In this way, the contaminants could be peeled off together with the resin coating film without scattering, and could be safely disposed of. The contaminants were separated from the surface of the base material as solid particles not smaller than 0.5 pm without volatilizing or evaporating, and without causing any damage to the surface of the metal base material. The particles adhering to the polyvinyl alcohol resin coating film were observed using a microscope and it was confirmed that the solid particles were not smaller than 0.5 pm.

### (Example 3)

### (1) Contaminated object

After salt water was sprayed onto a steel plate, red rust (Fe₂O₃) generated by natural exposure was cleaned from the surface of the steel plate by using the contaminant removing apparatus described above. A first reason why the removal of red rust generated by spraying salt water was examined was to solve a question of whether the red rust generated on the steel plate and containing salt water could be removed with the laser. A second reason was to solve a question of whether NaCl (salt), which is an impurity other than red rust, could be removed. Since Na belongs to alkali metals like Cs, which is a radionuclide, if Na can be removed, it is presumed that Cs can be removed as well.

### (2) Protective coating on inner surface of ultrasonic cleaning tank

As a protective coating on the inner surface of an ultrasonic cleaning tank, a two-component curable acrylic urethane coating material in which 7 nm-size silica was uniformly dispersed was used, and coating treatment was performed such that a dried film had a thickness of 20 µm. Thus, a coating film having high acid resistance, alkali resistance, heat resistance, and adhesion resistance was formed to prevent damage to stainless steel (SUS) forming the cleaning tank. Properties of the coating film are shown in Table 2.

**[Table 2]**

| Test items | Test results |
|---|---|
| Thickness of coating film | 20 µm |
| Hardness (pencil) | 7 H or more |
| Rendering | 10 points |
| Grid (100/100) | 100/100 |
| Tape test (100/100) | 100/100 |
| Impact resistance (1/2) 500 g/500 mm | No cracking, no peeling |
| Erichsen (diameter: 20 mm) 5.0 mm | No cracking, no peeling |
| Heat resistance | 700°C |
| Water resistance 100 hours | No change, no abnormality |
| Boiling resistance 60 minutes | No change, no abnormality |
| Alkali resistance 5% sodium hydroxide 48 hours | No change, no abnormality |
| Acid resistance 5% hydrochloric acid 48 hours | No change, no abnormality |
| Salt water resistance 5% 100 hours | No change, no abnormality |
| Yellowing resistance 180°C 60 minutes | No change, no abnormality |
| Weather resistance weather meter 300 hours | No change, no abnormality |

### (3) Ultrasonic cleaning step in organic acid cleaning solution

The ultrasonic cleaning apparatus 50 shown in FIG. 18 (not provided with the fine bubble generator 56) was used, a contaminated object having a steel plate surface contaminated with rust and radioactive contaminants was placed in an aqueous solution containing ascorbic acid in an amount of 5% by mass, and the frequency of ultrasonic waves was set to 26 kHz to 38 kHz. The treatment temperature was 40°C. In order to make cleaning conditions in the cleaning tank uniform, a cleaning solution stirring/circulating pump was attached. Further, a cyclone type microparticle removing apparatus for purifying the cleaning solution in the cleaning tank was attached, and coarse particles having a particle size of 10 pm or more that had been removed from the metal surface by ultrasonic cleaning were removed to prevent damage to the cleaning tank due to contact resonance with an oscillating plate or the like vibrated by ultrasonic waves. As a result, the thickness of the contaminants was reduced (about 20 pm or less).

### (4) Ultrasonic cleaning step in alkaline neutralizing solution

Neutralization treatment was performed by placing the contaminated object in an aqueous solution to which sodium hydrogen carbonate was added in an amount of 10% by mass, and performing ultrasonic cleaning. The treatment temperature was 25°C. Effluent after the organic acid cleaning treatment and effluent after the alkaline neutralization treatment were mixed to be neutralized, the neutralized treatment liquid was heated and distilled at a temperature not higher than 100°C, and the contaminants were concentrated and disposed of by landfill.

### (5) Drying step

Air-drying was performed at room temperature (5°C to 35°C).

### (6) Contaminant removing apparatus

The apparatus shown in FIGS. 1 and 2 was used. "ROD 1000W' (trade name) manufactured by Narran, which is an Nd:YAG fiber laser, was used as the nano-pulse laser oscillator 1. The average output was 1000 W, the light wavelength was 1064 to 1070 nm, the frequency was 10 kHz, the pulse width was 20 ns, the size was 400%, the focus was 172, the speed was 6000 mm/s, the energy density per unit area was 1.5 J/cm², the focal point diameter was 1 mm, the transmission fiber length was 15 m, the irradiator weight was 2.5 kg, the ambient temperature was 5°C to 45°C, the weight was 245 kg, and the power consumption was 5kW.

The flat beam shaper 15 manufactured by Narran was also used.

A nano-pulse laser beam having a rectangular flat top shape and used for irradiation of a contaminated surface had the waveform shown on the right in FIG. 3.

### (7) Result of removal of contaminants

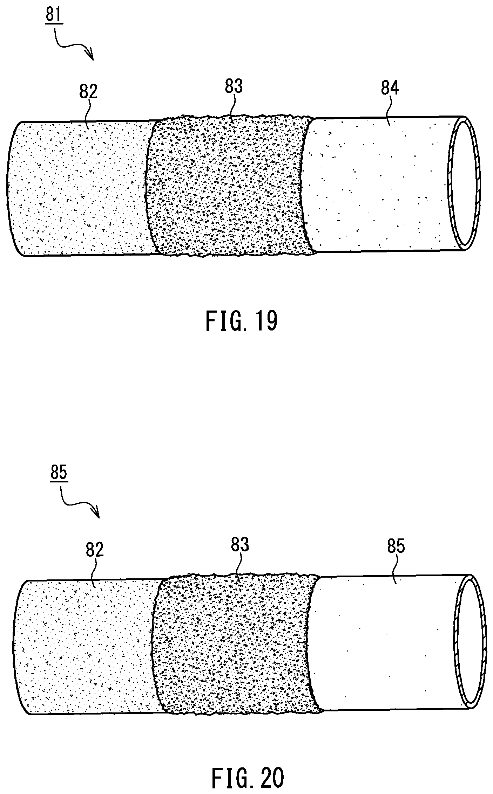

FIG. 19 is a schematic side view of a photograph of the contaminated object (pipe) 81 before and after cleaning. There were contaminants deposited on a non-treated portion 83 at the center, but the contaminants were substantially removed from a left portion 82 that was subjected to the ultrasonic treatment in the organic acid. The contaminants were slightly observed in a right portion 84 subjected to the nano-pulse laser treatment, but the contaminants were removed well from this portion 84. The contaminants could be separated from the surface of the base material as solid particles not smaller than 0.5 pm without volatilizing or evaporating, and without causing any damage to the surface of the metal base material, and could be collected with an air filter. The particles collected on the air filter were observed using a microscope and it was confirmed that the solid particles were not smaller than 0.5 pm.

### (Example 4)

Contaminants were removed in the same manner as in Example 1, except that the ultrasonic cleaning apparatus 71 including the fine bubble generator 77 was used. The fine bubble generator used was "OK Nozzle" (trade name) manufactured by OK Engineering Co., Ltd. This fine bubble generator generates micro bubbles having a size of several tens to hundred micrometers and ultra-fine bubbles (UFB) having a size of several tens to hundred nanometers.

FIG. 20 is a schematic side view of a photograph of a contaminated object (pipe) 85 before and after cleaning. Although a non-treated portion 83 and a portion 82 subjected to the ultrasonic treatment in the organic acid were substantially the same as those shown in FIG. 19, in a right portion 85 subjected to the nano-pulse laser treatment, not only contaminants but also black rust was completely removed, and the underground metal was seen. The contaminants could be separated from the surface of the base material as solid particles not smaller than 0.5 pm without volatilizing or evaporating, and without causing any damage to the surface of the metal base material, and could be collected with an air filter. The particles collected on the air filter were observed using a microscope and it was confirmed that the solid particles were not smaller than 0.5 µm. Further, since there was no oil or fat component, there was no fuming during the pulse cleaning and no clogging of the dust collection filter.

From the above results, it was confirmed that the contaminant removing apparatus according to this example can remove the contaminants without damaging the base material and without volatilizing the contaminants.

### [Industrial Applicability]

The contaminant removing apparatus and the contaminant removing method of the present invention are useful for removing toxic substances including radioactive contaminants such as cesium oxide and strontium oxide and/or chemical contaminants such as polychlorinated biphenyl (PCB) and dioxin. Furthermore, the contaminant removing apparatus and the contaminant removing method are also useful for nuclear facilities, waste incineration facilities, and the like.

### Description of Reference Numerals

- 1: Nano-pulse laser oscillator
- 2: Pulse generator
- 3: Seed LD3
- 4, 9: Isolator
- 5, 12: Coupler
- 6, 11: Excitation LD
- 7: Fiber cable
- 8: Preamplifier
- 10: Band pass filter
- 13: Main amplifier
- 14: Collimator
- 15: Flat beam shaper
- 16a, 16b: Optical system focus adjuster
- 17: Scan head
- 18: Laser profiler
- 19: Object to be irradiated (contaminated surface)
- 20: Nano-pulse laser irradiation apparatus
- 21: Metal base material
- 22: Lower layer
- 23: Intermediate layer
- 24: Outer layer
- 25, 28: Base metal
- 26, 27: Radioactively contaminated layer
- 29: Protective coating layer
- 30: Radioactively contaminated film
- 31: Degraded resin portion
- 32, 35: Base steel material
- 33: Mixed layer of oxide, chloride, sludge, etc.
- 34: Contaminated layer of oxide, chloride, sea salt, etc.
- 36: Epoxy resin layer
- 40: Gaussian shaped beam
- 41: Excess energy of Gaussian shaped beam
- 42: Irradiation diameter of Gaussian shaped beam
- 43: Thermal energy of Gaussian shaped beam
- 44: Rectangular flat top shaped beam
- 45: Irradiation diameter of rectangular flat top shaped beam
- 46: Thermal energy of rectangular flat top shaped beam
- 47: Ablation threshold value
- 50, 54: Cross section before laser cleaning
- 51: Iron base material portion
- 52: Contaminant
- 53, 55: Cross section after laser cleaning
- 56: SUS base material
- 57: Chloride particles
- 58: Oil molecules such as PCB contaminant
- 59: Adhering microparticles insoluble in water
- 60: Wet coating film
- 61: Polyvinyl alcohol resin
- 62: Polyvinyl alcohol resin coating film
- 63: Microparticles of sodium hydrogen carbonate (NaHCO₃)
- 64: Microparticles captured in resin coating film
- 65: Direction of evaporation of moisture at low temperature
- 66: Weak adhesion surface
- 67: Laser irradiation apparatus
- 68: Nano-pulse laser beam
- 69: Air duster (air knife)
- 70: Air
- 71: Ultrasonic cleaning apparatus
- 72: Cleaning tank
- 73a to 73d: Ultrasonic oscillator
- 74: Contaminated object
- 75: Circulation pump
- 76: Cyclone
- 77: Fine bubble generator
- 78: Cleaning solution
- 79: Particles
- 80: Circulation circuit
- 81: Contaminated object (pipe)
- 82: Portion subjected to ultrasonic treatment in organic acid
- 83: Non-treated portion
- 84, 85: Portion subjected to nano-pulse laser treatment

## Claims

1. A contaminant removing apparatus for removing a surface contaminant by irradiating a contaminated surface with a nano-pulse laser beam emitted from a pulse oscillator, the contaminant removing apparatus comprising:
a means for converting a nano-pulse laser beam that is a Gaussian shaped beam emitted from the pulse oscillator into a nano-pulse laser beam of a rectangular flat top shape using a flat beam shaper; and
a means for irradiating the contaminated surface with the nano-pulse laser beam of the rectangular flat top shape,
wherein the contaminant removing apparatus removes the surface contaminant as a solid not smaller than 0.15 pm.

2. The contaminant removing apparatus according to claim 1,
wherein the nano-pulse laser beam emitted from the pulse oscillator has a minimum average output of 500 w or more and a maximum output of 2.5 Mw or more.

3. The contaminant removing apparatus according to claim 1 or 2,
wherein the pulse oscillator has a pulse width of 10 ns or more and 500 ns or less.

4. The contaminant removing apparatus according to any one of claims 1 to 3,
wherein the pulse oscillator has a frequency of 10 kHz or more and 50 kHz or less.

5. The contaminant removing apparatus according to any one of claims 1 to 4,
wherein a focal point diameter of the nano-pulse laser beam of the rectangular flat top shape used to irradiate the contaminated surface is adjustable to be 1 mm or more and 1.8 mm or less.

6. The contaminant removing apparatus according to any one of claims 1 to 5,
wherein the nano-pulse laser beam of the rectangular flat top shape used to irradiate the contaminated surface has an energy density per unit area of 1 to 10 J/cm².

7. The contaminant removing apparatus according to any one of claims 1 to 6,
wherein the pulse oscillator is an Nd:YAG laser pulse oscillator.

8. The contaminant removing apparatus according to any one of claims 1 to 7,
wherein the pulse oscillator is a pulse oscillator that emits a beam with a single wavelength controlled to be 1064 nm or more and 1070 nm or less.

9. The contaminant removing apparatus according to any one of claims 1 to 8, further comprising:
a means for transmitting the nano-pulse laser beam emitted from the pulse oscillator to an irradiation apparatus via a fiber cable having a length of 10 m or more and 150 m or less.

10. A contaminant removing method using the contaminant removing apparatus according to any one of claims 1 to 9, the method comprising:
a means for converting a nano-pulse laser beam that is a Gaussian shaped beam emitted from a pulse oscillator into a nano-pulse laser beam of a flat top shape using a flat beam shaper; and
a means for irradiating a contaminated surface with the nano-pulse laser beam of the flat top shape,
wherein the surface contaminant is removed as a solid not smaller than 0.15 pm without damaging a base material and without volatilizing the contaminant.

11. The contaminant removing method according to claim 10,
wherein the contaminated surface is coated in advance with a solution of a water-soluble resin, and dried, and
then a dried coating film containing the contaminant is irradiated with the nano-pulse laser beam of the rectangular flat top shape to peel off the contaminant together with the coating film of the water-soluble resin from a base material surface without volatilizing the contaminant through heating.

12. The contaminant removing method according to claim 11,
wherein the water-soluble resin is a solution obtained by dissolving at least one selected from polyvinyl alcohol, polyvinyl acetal, polyvinyl acetate, polyvinyl pyrrolidone, polyethylene oxide, a phenolic hydroxyl group-containing resin, and a carboxyl group-containing resin by adding 1000 to 10000 parts by mass of water to 100 parts by mass of the water-soluble resin.

13. The contaminant removing method according to claim 11 or 12,
wherein an alkaline substance and/or an acidic substance is added to the solution of the water-soluble resin, the contaminant is dissolved in water, and the contaminant is dispersed as microparticles in the water-soluble resin when the water is evaporated.

14. The contaminant removing method according to any one of claims 10 to 13,
wherein the contaminated object is subjected to ultrasonic cleaning in advance in a cleaning tank using a slightly acidic organic acid cleaning solution that is an aqueous solution of at least one selected from the group consisting of citric acid, ascorbic acid, glycolic acid, malonic acid, acetic acid, and oxalic acid, the contaminated object is subjected to ultrasonic cleaning in an alkaline neutralizing solution, and dried or dewatered, and
then the contaminated surface is irradiated with the nano-pulse laser beam of the rectangular flat top shape to peel off the contaminant from the contaminated surface.

15. The contaminant removing method according to any one of claims 10 to 14,
wherein ultrasonic waves with a frequency of 15 to 40 kHz are used in the ultrasonic cleaning in the organic acid cleaning solution and in the neutralizing solution.
